# EUROPÄISCHE PATENTSCHRIFT

(11) **EP 1 903 762 B1**
(45) Veröffentlichungstag und Bekanntmachung des Hinweises auf die Patenterteilung: **12.08.2015**
(21) Anmeldenummer: 06019702.7
(22) Anmeldetag: 20.09.2006
(51) Int. Cl.: H04M 3/42, H04M 3/436, H04M 3/38

(54) **Verhinderung eines Verbindungsaufbaus von einer privaten Nebenstellenanlage zu einem nicht verfügbaren Mobilfunkendgerät**
Prevention of call establishment of a private branch exchange to an unavailable portable radio terminal
Prévention d'établissement d' un appel d'un central téléphonique privé à une terminal radio portable qui n'est pas disponible

(43) Veröffentlichungstag der Anmeldung: 26.03.2008
(73) Patentinhaber: Unify GmbH & Co. KG, 81379 München (DE)
(72) Erfinder: Montag, Uwe, 81739 München (DE); Schaade, Stephan, 86807 Buchloe (DE)
(74) Vertreter: Fritzsche, Thomas

(56) Entgegenhaltungen:
- WO-A2-2005/013624
- US-A- 4 969 182
- US-A1- 2005 164 686

## Beschreibung

Es ist bekannt, dass Kommunikationsverbindungen, insbesondere Telefongespräche, vom Festnetz zu Kommunikationsgeräten mobiler Kommunikationsnetze geführt werden und umgekehrt. In beiden Netzen ist üblich, dem Nutzer des Endgerätes die Möglichkeit zu geben, in seiner Abwesenheit eingehende Anrufe nicht zu versäumen, in dem man lokale Anrufbeantworterfunktionen bzw. zentrale Mailboxfunktionen anbietet. Für einen Anrufer bedeutet dies zwar, dass er im Falle der Abwesenheit des von ihm gewünschten Teilnehmers eine Nachricht hinterlegen kann. Ein Interagieren mit dem gewünschten Teilnehmer ist aber nicht möglich. Ferner entstehen Kosten, so dass diese Hinterlegung von Nachrichten nicht nur im Grunde zumindest nicht voll befriedigend ist, sondern auch zusätzliche Kosten verursacht. Die einzige Möglichkeit, die dem Anrufer bleibt, diese Kosten zu vermeiden, ist es, rechtzeitig die Kommunikationsverbindung zu unterbrechen.

Aus der US 2005/0164686 A1 ist ein Verfahren und eine Anordnung bekannt, die es Nutzern von Mobilfunkgeräten ermöglicht die Weiterleitung von Anrufen in ein durch eine Nebenstelleneinrichtung realisiertes privates Netz zu blockieren.

Die der Erfindung zugrunde liegende Aufgabe besteht darin, ein einfaches Verfahren sowie eine einfache Anordnung anzugeben, die eine höhere Nutzerakzeptanz gewährleistet.

Diese Aufgabe wird ausgehend von dem Verfahren gemäß dem Oberbegriff des Anspruchs 1 durch dessen kennzeichnende Merkmale gelöst. Ferner löst diese Aufgabe die Anordnung gemäß dem Anspruch 15.

Bei dem erfindungsgemäßen Verfahren zur Abwicklung von durch private Nebenstelleneinrichtungen zu einem Mobilfunknetz vermittelter Verbindungen wird eine Nachricht eines Abmeldens eines mobilen Kommunikationsgerätes des Mobilfunknetzes dadurch an die Nebenstelleneinrichtung übermittelt wird, dass das mobile Kommunikationsgerät eine Verbindung zu einem ersten Port oder einer ersten Nebenstelle der privaten Nebenstelleneinrichtung herstellt, nach Herstellen abbricht, wodurch die private Nebenstelleneinrichtung die erfolgte Verbindung erfasst, und eine dem mobilen Kommunikationsendgerät zugeordnete Information detektiert, einer Kontrolleinrichtung die zugeordnete Information über das abmeldende mobile Kommunikationsgerät von der Nebenstelleneinrichtung übermittelt wird, und die Kontrolleinrichtung derart mit der privaten Nebenstelleneinrichtung kommuniziert, dass bei einer Vermittlung eines von einem an die private Nebenstelleneinrichtung angeschlossenen Kommunikationsgerätes ausgehenden Verbindungswunsches zu einem mobilen Kommunikationsendgerät bei angemeldeten mobilen Kommunikationsgerät ein Verbindungsaufbau seitens der privaten Nebenstelleneinrichtung unterbleibt.

Hierdurch wird gewährleistet, dass seitens eines aus einem privaten Netz abgesetzten Verbindungswunsches keine unnötigen Kosten dadurch entstehen, dass der betreffende Nutzer zu einer Mobilbox weitergeleitet wird. Ferner werden auch Ressourcen externer Netze vor unnötiger Belegung von Kommunikationskanälen verschont.

Vorteilhaft lässt sich dies dadurch weiterbilden, dass seitens der privaten Nebenstelleneinrichtung bei Unterbleiben des Verbindungsaufbaus die Aufnahme einer Sprachnachricht angeboten wird, wobei eine aufgenommene Sprachnachricht für das mobile Kommunikationsgerät abrufbar in einer der privaten Nebenstelleneinrichtung zugeordneten Speichereinrichtung gespeichert wird. Hierdurch wird erreicht, dass dem mobilen Kommunikationsendgerät bzw. dem Nutzer dieses Gerätes es nach wie vor ermöglicht wird, eine Benachrichtigung bzw. Nachricht zu erhalten, wobei gleichzeitig der genannte Gebührenvorteil für den Nutzer des privaten Netzes gegeben bleibt.

Alternativ oder ergänzend besteht eine vorteilhafte Weiterbildung darin, dass das Unterbleiben durch ein seitens der privaten Nebenstelleneinrichtung durchgeführtes Sperren einer dem mobilen Kommunikationsgerät zugeordneten Nummer realisiert wird. Hierbei handelt es sich um eine einfache Realisierung des Unterbleibens basierend auf der Funktionalität bekannter privater Nebenstelleneinrichtungen.

Vorzugsweise erfolgt das Unterbleiben aufgrund einer von der Kontrolleinrichtung an die private Nebenstelleneinrichtung versandten ersten Nachricht. Hierdurch wird gewährleistet, dass die Kontrolleinrichtung die private Nebenstelleneinrichtung steuert und im Idealfall bekannte private Nebenstelleneinrichtungen nicht bzw. nur unwesentlich einer Modifikation unterworfen werden müssten, um das erfindungsgemäße Verfahren vorteilhaft durchführen zu können.

Ferner erfolgt vorzugsweise bei angemeldetem mobilem Kommunikationsgerät durch ein seitens der privaten Nebenstelleneinrichtung durchgeführtes Verbinden mit dem mobilen Kommunikationsgerät eine Verbindung zum mobilen Kommunikationsgerät.

Dabei erfolgt das Durchführen der Verbindung aufgrund einer der von der Kontrolleinrichtung an die private Nebenstelleneinrichtung versandten zweiten Nachricht, so dass auch für diesen Fall die Kontrolle seitens der Kontrolleinrichtung sicher gestellt ist, so dass die private Nebenstelleneinrichtung sowie das mobile Kommunikationsgerät weitestgehend von Änderungen zur Durchführung des Verfahrens verschont bleiben.

Dabei erfolgt das Versenden der ersten und/oder zweiten Nachricht auf Grundlage einer an die Kontrolleinrichtung übermittelten Information über eine Statusänderung des mobilen Kommunikationsgerätes.

Erfindungsgemäß wird die Statusänderung derart erfasst wird, dass das mobile Kommunikationsgerät eine Verbindung zu einem ersten Port der privaten Nebenstelleneinrichtung herstellt, unmittelbar nach Herstellen wieder abbricht, dabei die private Nebenstelleneinrichtung die erfolgte Verbindung erfasst und diese dem mobilen Kommunikationsendgerät zugeordnete Informationen detektiert. Der Vorteil dieser Vorgehensweise liegt darin, dass durch Festlegen eines bestimmten Ports der privaten Nebenstelleneinrichtung bereits durch Anwahl genau dieses Ports klar ist, dass die anrufende mobile Kommunikationseinrichtung eine Statusänderung signalisiert, so dass somit eine sehr einfache Realisierung des Verfahrens unterstützt wird.

Alternativ hierzu kann die Statusänderung erfindungsgemäß derart erfasst werden, dass das mobile Kommunikationsgerät eine Verbindung zu einer ersten Nebenstelle der privaten Nebenstelleneinrichtung herstellt, diese unmittelbar nach Herstellen wieder abbricht, so dass die private Nebenstelleneinrichtung die erfolgte Verbindung erfassen und einer Kontrolleinrichtung dem mobilen Kommunikationsgerät zugeordnete Informationen übermittelt werden können.

Bevorzugt erfasst dabei die Kontrolleinrichtung diese zugeordnete Information, wobei vorzugsweise diese Erfassung auf Grundlage der D-Kanal Monitoring-Funktion der privaten Nebenstelleneinrichtung erfolgt. Durch dieses gewissermaßen automatische Erfassen seitens der Kontrolleinrichtung ist diese in der Lage, unmittelbar auf die Statusänderung zu reagieren.

Dabei stellt eine vorteilhafte Weiterbildung sich so dar, dass als Information die Rufnummer des mobilen Kommunikationsendgerätes detektiert wird. In der Regel genügt nämlich allein diese Information, so dass deren Detektion bzw. Erfassung einfach und ressourcenschonend realisiert werden kann.

Bei einer weiteren vorteilhaften Ausgestaltung des Verfahrens erfolgt jeweils eine Umkehrung des Status des mobilen Kommunikationsgerätes durch das Herstellen der Verbindung, d.h. es wird beispielsweise detektiert, ob ein Zustand zu der zugeordneten Information insbesondere der Rufnummer vorliegt und wenn ja, dieser Status umgekehrt; ansonsten in einen Default-Zustand versetzt.

Alternativ oder ergänzend ist es von Vorteil, dass die Statusänderung derart erfasst wird, dass das mobile Kommunikationsgerät über einen insbesondere das Internetprotokoll nutzenden Datendienst, insbesondere nach dem General Packet Switched Radio GPRS oder dem Wireless Application Protokoll WAP funktionierenden Dienst mit dem mobilen Kommunikationsgerät zugeordnete Information übermittelt. Durch diese Weiterbildung wird es insbesondere ermöglicht, direkt mit der Kontrolleinrichtung zu kommunizieren bzw. auch über die bloße Rufnummer weitergehende Daten zu übermitteln, beispielsweise einen Klartext, wie erreichbar oder nicht erreichbar. Diese Weiterbildung stellt zudem eine Alternative dar, zu dem Ansatz die private Nebenstelleneinrichtung direkt anzurufen, welche beispielsweise dann zum Tragen kommt, wenn dieser Weg versperrt sein sollte.

Bevorzugt enthält aber die Information die Rufnummer des mobilen Endgerätes sowie zumindest den Status, insbesondere ob dieser erreichbar oder unerreichbar bedeutet.

Eine weitere vorteilhafte Ausgestaltung besteht darin, dass die Kontrolleinheit über einen insbesondere das Internetprotokoll nutzende und insbesondere nach dem General Packet Switched Radio GPRS oder Wireless Application Protokoll WAP funktionierenden Datendienst Information der privaten Nebenstelleneinrichtung zur Weiterverarbeitung auslesen kann. Hierdurch wird die Kontrolleinrichtung in die Lage versetzt, alle verfügbaren Informationen der privaten Nebenstelleneinrichtung auslesen zu können.

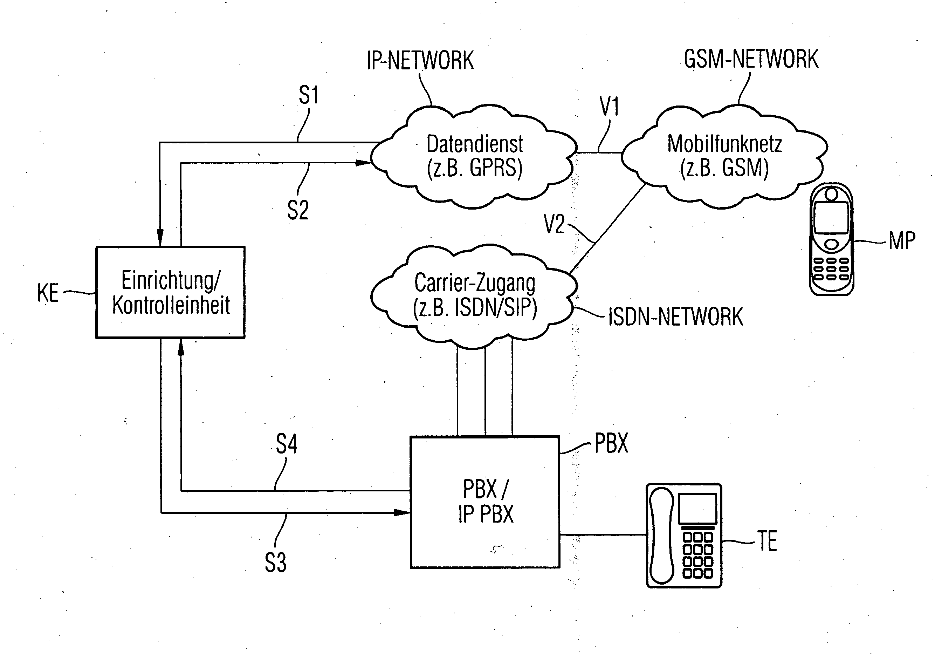

Weitere Einzelheiten und Vorteile der Erfindung sollen ausgehend von den in der einzigen Figur dargestellten Ausführungsbeispielen näher erläutert werden. Dabei zeigt die
- Figur: schematisch ein Beispiel einer erfindungsgemäßen Anordnung mit zwei der möglichen Varianten des erfindungsgemäßen Verfahrens.

In der Figur ist eine schematische Darstellung von das erfindungsgemäße Verfahren durchführenden bzw. umsetzenden Elementen dargestellt.

Zum einen erkennt man eine private Nebenstelleneinrichtung PBX, an welche zur Vereinfachung nur ein Teilnehmerendgerät TE, welches als Telefon ausgestaltet sein kann, angeschlossen ist. Ferner ist ein Mobiltelefon MP dargestellt, welches eine Verbindung zu einem Mobilfunknetz GSM Netz aufweist. Dabei handelt es sich vereinfachend um ein GSM Netz. Die Erfindung umfasst aber auch andere Mobilfunknetze und -standards, wie beispielsweise UMTS.

Soll nun zu diesem Mobilteil MP von einem Teilnehmer, der das Teilnehmerendgerät TE nutzt, eine Kommunikationsverbindung aufgebaut werden, so kann der Nutzer gemäß einem illustrativen Beispiel einen vergeblichen Verbindungsversuch, der in Kosten produzierende Aktionen, wie beispielsweise der Aufnahme einer Mailboxnachricht im Mobilfunknetz, führt, damit vermeiden, dass eine zwischen dem Mobilfunknetz GSM-NETWORK und der privaten Nebenstelleneinrichtung PBX betriebene Kontrolleinheit KE gemäß einer ersten Variante V1 aufgenommene Informationen über den An- bzw. Abmeldestatus des Mobilfunkendgerätes MP, die das Mobilteil MP unter Nutzung von IP-basierten Datendiensten, wie zum Beispiel GPRS, welche über ein IP-Netzwerk IP NETWORK an die Kontrolleinrichtung KE übermittelt werden und im Falle, dass seitens des Mobilteils MP der Kontrolleinrichtung KE gemeldet worden ist, dass sich das Mobilteil MP abgemeldet hat, die über die Nebenstelleneinrichtung PBX eingehende Nachfrage nach einer Verbindung nicht zu einer Verbindung zum Mobilgerät MP münden lässt, sondern die gewählte Mobilfunknummer für den Anruf sperrt oder gemäß einer Alternative der Erfindung automatisch auf eine interne Voicemailbox, welche vom Mobilteil MP abgerufen werden kann, leitet, so dass für den durch die private Nebenstelleneinrichtung PBX versorgten Teilnehmer TE keine Kosten entstehen und im Falle, dass der Kommunikationseinrichtung KE Informationen vorliegen, dass das Mobilteil MP angemeldet ist, den Verbindungswunsch derart zu einer Verbindung zum Mobilfunknetz GSM münden lässt, dass die Kontrolleinrichtung KE der Nebenstelleneinrichtung PBX eine entsprechende Anweisung gibt, die die Nebenstelleneinrichtung PBX veranlasst, diesen Verbindungswunsch zu einer Verbindung zum Mobilfunknetz GSM bzw. letztendlich zum Mobilgerät MP werden zu lassen.

Bei einer erfindungsgemäßen Alternative V2 und somit einem Ausführungsbeispiel der Erfindung, welches ebenso in der schematischen Darstellung enthalten ist, bezieht die Kontrolleinrichtung KE die Information über einen an- bzw. abmeldenden Mobilfunkteilnehmer über die Nebenstelleneinrichtung PBX, welche ihrerseits diese Information über den Carrier-Zugang ISDN NETWORK und dem Mobilfunknetz GSM NETWORK durch das Mobilteil MP angestoßen erhält.

Bei dem dargestellten Beispiel hat die Kontrolleinheit KE somit zumindest fünf Funktionen.

Eine erste Funktion, die dann zum Tragen kommt, wenn das Mobilfunktelefon MP sich bei der Kontrolleinheit KE meldet und den Zustand erreichbar mitteilt und dadurch gekennzeichnet ist, dass nach einem derartigen Anmelden die Kontrolleinheit KE der Nebenstelleneinrichtung PBX den Auftrag erteilt, die Rufnummer des Mobiltelefons MP freizuschalten, so dass jeder Nutzer der Nebenstelleneinrichtung PBX, welcher diese freigeschaltete Mobilfunknummer anrufen möchte, von der Nebenstelleneinrichtung PBX auch wie üblich verbunden wird.

Eine zweite Funktion, die dann zum Tragen kommt, wenn die Kontrolleinheit KE der Nebenstelleneinrichtung PBX den Auftrag erteilt, die Mobilfunknummer in der Nebenstelleneinrichtung freizuschalten, die derart ausgestaltet ist, dass dem Mobiltelefon MP die Möglichkeit gegeben wird, sich auch bei der Kontrolleinheit KE abzumelden, wenn es zur Annahme von Gesprächen nicht mehr zur Verfügung steht, wobei wie oben erläutert, dies über zumindest zwei Wege V1, V2 realisiert werden kann, die gegebenenfalls auch kombinierbar sind.

Dabei erhält die Nebenstelleneinrichtung PBX bei der zweiten Variante V2 den Status Abmelden seitens des Mobiltelefons MP dadurch, dass das Mobiltelefon MP einen definierten Port oder alternativ eine definierte Nebenstelle der Nebenstelleneinrichtung PBX anruft und sofort wieder auflegt, so dass die Nebenstelleneinrichtung PBX hierdurch die Rufnummer des abwesenden Mobilteils MP detektieren und an die Kontrolleinheit KE weiterleiten kann. Dabei kann diese Detektion bzw. Weiterleitung über die D-Kanal Monitoring-Funktionen einer Nebenstelleneinrichtung PBX erfolgen.

Bei der ersten Variante V1 wird über die IP-Datendienste eine Nachricht übermittelt, aus der für die Kontrolleinrichtung KE entnehmbar ist, dass das Mobilteil MP für ankommende Gespräche nicht mehr erreichbar ist. Die Mobilfunknummer wird dabei also über einen mobilfunkseitig gestützten Datendienst, wie dem GPRS oder vergleichbaren übermittelt.

Eine dritte Funktion kommt dann zum Tragen, wenn das Mobiltelefon sich nach der ersten Variante bei der Kontrolleinheit dadurch abmeldet, dass es den Zustand nicht erreicht hat, mitteilt und daraufhin die Kontrolleinheit KE der Nebenstelleneinrichtung PBX den Auftrag gibt, diese Rufnummer des Mobiltelefons MP zu sperren, so dass jeder Nutzer der Nebenstelleneinrichtung PBX, welcher diese gesperrte Mobilfunknummer anrufen möchte, von der Nebenstelleneinrichtung PBX nicht ins Mobilnetz geleitet bzw. mit diesem verbunden wird, sondern durch eine vierte Funktion der Kontrolleinrichtung KE, die dann zum Tragen kommt, wenn eben der Auftrag zur Sperrung einer Mobilfunknummer ergangen ist, bei Verbindungswünschen zu dieser Nummer den Nutzer der Nebenstelleneinrichtung PBX, von dem aus dieser Wunsch gestartet wurde, auf eine interne Voicemailbox weitergeleitet wird.

Die Kontrolleinheit KE ist dabei derart ausgestaltet, dass es Informationen jedweder Art aus der Nebenstelleneinrichtung PBX annehmen, erkennen und weiterverarbeiten kann und beispielsweise aufbereitet über einen Datendienst, wie beispielsweise dem GPRS, an ein spezielles Mobiltelefon MP übermittelt werden.

Denkbar wäre beispielsweise, dass die Nebenstelleneinrichtung PBX der Kontrolleinheit KE mitteilt, welcher Anrufer versucht hat, die Mobilfunknummer zu erreichen, während diese Nummer in der Nebenstelleneinrichtung aufgrund der Abwesenheit des Mobilteils MP gesperrt war, Hierdurch ist also eine fünfte Funktion der Kontrolleinheit gegeben.

Die An- bzw. Abmeldung eines Mobiltelefons MP über einen Datendienst können beispielsweise sehr einfach dadurch realisiert werden, dass das Mobiltelefon MP mit einem Java-basierten Programm, also einem plattformunabhängigen Programm ausgestattet ist, welches die Steuerung zur Abwicklung der Kommunikation mit der Kontrolleinheit KE durchführt. Denkbar wäre dabei auch, dass Anrufe an die Kontrolleinheit KE hierdurch bzw. der Empfang und die Aufbereitung der Information aus der Kontrolleinheit, z.B. die Anruferliste, ebenfalls auf solche Java-basierte Programme zurückgreifen.

Die Erfindung ist dabei nicht auf die dargestellten Ausführungsbeispiele beschränkt. Vielmehr sind alle im Rahmen fachmännischen Könnens liegende Variationen enthalten, die die Kerngedanken der Erfindung
- ein erster Schritt S1: Die Kontrolleinheit KE erhält Anbzw. Abmeldeinformationen des Mobilfunk-Endgerätes MP; z.B. über GPRS,
- ein zweiter Schritt S2: Die Kontrolleinheit KE steuert das Mobilfunkgerät MP; z.B. über GPRS,
- ein dritter Schritt S3: Die Kontrolleinheit KE steuert die private Nebenstelleneinrichtung PBX (Anweisung: Rufnummer bestimmter Mobilfunk-Teilnehmer freischalten oder sperren ggf. Anrufweiterleitung an interne Mailbox),
- alternativ oder ergänzend ein vierter Schritt S4: Die Kontrolleinheit KE nimmt Informationen der privaten Nebenstelleneinrichtung PBX entgegen (z.B. die An- bzw. Abmeldeinformationen des Mobilfunkteilnehmers bzw. -gerätes MP, wiedergeben und unter den durch die unabhängigen Ansprüche definierten Schutzumfang fallen.

## Patentansprüche

1. Verfahren zur Abwicklung von durch eine private Nebenstelleneinrichtung (PBX) zu einem Mobilfunknetz (GSM) vermittelter Verbindungen bei dem eine Kontrolleinrichtung (KE) derart mit der privaten Nebenstelleneinrichtung (PBX) kommuniziert, dass bei einer Vermittlung eines von einem an die private Nebenstelleneinrichtung (PBX) angeschlossenen Kommunikationsgerät (TE) ausgehenden Verbindungswunsches zu einem mobilen Kommunikationsgerät (MP) bei abgemeldeten mobilen Kommunikationsgerät (MP) ein Verbindungsaufbau seitens der privaten Nebenstelleneinrichtung (PBX) aufgrund einer von der Kontrolleinrichtung (KE) an die private Nebenstelleinrichtung (PBX) versandten ersten Nachricht unterbleibt, **dadurch gekennzeichnet, dass**
- eine Information über eine Statusänderung des mobilen Kommunikationsgerätes (MP) in Form eines Abmeldens des mobilen Kommunikationsgerätes (MP) des Mobilfunknetzes (GSM) dadurch an die Nebenstelleneinrichtung (PBX) übermittelt wird, dass
a) das mobile Kommunikationsgerät (MP) eine Verbindung zu einem definierten Port oder einer definierten Nebenstelle der privaten Nebenstelleneinrichtung (PBX) herstellt und unmittelbar nach Herstellen wieder abbricht, wodurch
b) die private Nebenstelleneinrichtung (PBX) die erfolgte Verbindung erfasst, und
c) eine dem mobilen Kommunikationsgerät (MP) zugeordnete Information umfassend eine Rufnummer des mobilen Kommunikationsgerätes (MP) detektiert,
- der Kontrolleinrichtung (KE) die zugeordnete Information über das abmeldende mobile Kommunikationsgerät (MP) als Statusänderung des mobilen Kommunikationsgerätes (MP) von der Nebenstelleneinrichtung (PBX) übermittelt wird.

2. Verfahren nach Anspruch 1, **dadurch gekennzeichnet, dass** eine Information über eine Statusänderung des mobilen Kommunikationsgerätes (MP) in Form eines Anmeldens des mobilen Kommunikationsgerätes (MP) dadurch an die Nebenstelleneinrichtung (PBX) übermittelt wird, dass
a) das mobile Kommunikationsgerät (MP) eine Verbindung zu dem definierten Port oder der definierten Nebenstelle der privaten Nebenstelleneinrichtung (PBX) herstellt und unmittelbar nach Herstellen wieder abbricht, wodurch
b) die private Nebenstelleneinrichtung (PBX) die erfolgte Verbindung erfasst, und
c) eine dem mobilen Kommunikationsgerät (MP) zugeordnete Information umfassend eine Rufnummer des mobilen Kommunikationsgerätes (MP) detektiert, und
- der Kontrolleinrichtung (KE) die zugeordnete Information über das anmeldende mobile Kommunikationsgerät (MP) als Statusänderung des mobilen Kommunikationsgerätes (MP) von der Nebenstelleneinrichtung (PBX) übermittelt wird.

3. Verfahren nach Anspruch 1 oder 2, **dadurch gekennzeichnet, dass** seitens der privaten Nebenstelleneinrichtung (PBX) bei Unterbleiben des Verbindungsaufbaus
a) seitens der privaten Nebenstelleneinrichtung (PBX) die Aufnahme einer Sprachnachricht angeboten wird,
b) eine aufgenommene Sprachnachricht für das mobile Kommunikationsgerät (MP) abrufbar in einer der privaten Nebenstelleneinrichtung (PBX) zugeordneten Speichereinrichtung gespeichert wird.

4. Verfahren nach einem der vorhergehenden Ansprüche, **dadurch gekennzeichnet, dass** das Unterbleiben durch ein seitens der privaten Nebenstelleneinrichtung (PBX) durchgeführtes Sperren einer dem mobilen Kommunikationsgerät (MP) zugeordneten Rufnummer realisiert wird.

5. Verfahren nach einem der vorhergehenden Ansprüche, **dadurch gekennzeichnet, dass** bei angemeldeten mobilen Kommunikationsgerät (MP) durch ein seitens der privaten Nebenstelleneinrichtung (PBX) durchgeführtes Verbinden mit dem mobilen Kommunikationsgerät (MP) eine Verbindung zum mobilen Kommunikationsgerät (MP) hergestellt wird.

6. Verfahren nach einem der vorhergehenden Ansprüche, dass das Durchführen der Verbindung aufgrund einer von der Kontrolleinrichtung (KE) an die private Nebenstelleneinrichtung (PBX) versandten zweiten Nachricht erfolgt.

7. Verfahren nach einem der vorhergehenden Ansprüche, **dadurch gekennzeichnet, dass** das Versenden der ersten und/oder zweiten Nachricht auf Grundlage einer an die Kontrolleinrichtung (KE) übermittelten Information über eine Statusänderung des mobilen Kommunikationsgerätes (MP) erfolgt.

8. Verfahren nach einem der vorhergehenden Ansprüche, **dadurch gekennzeichnet, dass** die Kontrolleinrichtung (KE) die zugeordnete Information auf Grundlage der D-Kanal Monitoring-Funktion der privaten Nebenstelleneinrichtung (PBX) erfasst.

9. Verfahren nach einem der vorhergehenden Ansprüche, **dadurch gekennzeichnet, dass** als zugeordnete Information allein die Rufnummer des mobilen Kommunikationsgerätes (MP) detektiert wird.

10. Verfahren nach einem der vorhergehenden Ansprüche, **dadurch gekennzeichnet, dass** durch das Herstellen der Verbindung der Status des mobilen Kommunikationsgerätes jeweils umgekehrt wird.

11. Verfahren nach einem der vorhergehenden Ansprüche, **dadurch gekennzeichnet, dass** die Statusänderung derart erfasst wird, dass das mobile Kommunikationsgerät (MP) über einen, insbesondere das "Internet Protokoll" IP nutzenden und insbesondere nach dem "General Packet Switched Radio" GPRS, "Wireless Application Protokoll" WAP funktionierenden, Datendienst mit dem mobilen Kommunikationsgerät (MP) zugeordnete Informationen übermittelt.

12. Verfahren nach einem der vorhergehenden Ansprüche, **dadurch gekennzeichnet, dass** die Information die Rufnummer des mobilen Kommunikationsgerätes (MP) sowie zumindest den Status, insbesondere "erreichbar" oder "unerreichbar", enthält.

13. Verfahren nach einem der vorhergehenden Ansprüche, **dadurch gekennzeichnet, dass** die Kontrolleinheit (KE) über einen, insbesondere das "Internet Protokoll" IP nutzenden und insbesondere nach dem "General Packet Switched Radio" GPRS, "Wireless Application Protokoll" WAP funktionierenden, Datendienst Informationen der privaten Nebenstelleneinrichtung (PBX) zur Weiterverarbeitung auslesen kann.

14. Anordnung zur Abwicklung von durch private Nebenstelleneinrichtungen (PBX) zu einem Mobilfunknetz (GSM) vermittelter Verbindungen, **gekennzeichnet durch** Mittel zur Durchführung des Verfahrens nach einem der vorhergehenden Ansprüche.

## Claims

1. Method for processing connections conveyed by a private branch exchange (PBX) to a mobile phone network (GSM), wherein a control device (KE) communicates in such a manner with the private branch exchange (PBX) that, in the case of conveying of a connection request, originating from a communication device (TE) connected to the private branch exchange (PBX), to a mobile communication device (MP), in the case of a logged off mobile communication device (MP), a connection setup ceases on the part of the private branch exchange (PBX) due to a first message sent by the control device (KE) to the private branch exchange (PBX), **characterized in that**
- information regarding a status change of the mobile communication device (MP) is transmitted in the form of a logging off of the mobile communication device (MP) of the mobile phone network (GSM) to the branch exchange (PBX), **in that**
a) the mobile communication device (MP) establishes a connection to a defined port or to a defined branch exchange of the private branch exchange (PBX) and after the establishment immediately aborts again, as a result of which
b) the private branch exchange (PBX) acquires the connection that has occurred, and
c) detects information associated with the mobile communication device (MP), comprising a call number of the mobile communication device (MP),
- the associated information regarding the logging off mobile communication device (MP) is transmitted to the control device (KE) as a status change of the mobile communication device (MP) by the private branch exchange (PBX).

2. Method according to Claim 1, **characterized in that** information regarding a status change of the mobile communication device (MP) is transmitted in the form of a logging on of the mobile communication device (MP) to the branch exchange (PBX), **in that**
a) the mobile communication device (MP) sets up a connection to the defined port or the defined branch exchange of the private branch exchange (PBX) and immediately after the establishment aborts it again, as a result of which,
b) the private branch exchange (PBX) acquires the connection that has occurred, and
c) and detects information associated with the mobile communication device (MP), comprising a call number of the mobile communication device (MP), and
- the associated information regarding the logging on mobile communication device (MP) is transmitted to the control device (KE) as a status change of the mobile communication device (MP) by the branch exchange (PBX).

3. Method according to Claim 1 or 2, **characterized in that**, on the part of the private branch exchange (PBX), in case of cessation of the connection setup
a) on the part of the private branch exchange (PBX), the recording of a voice message is offered,
b) a recorded voice message for the mobile communication device (MP) is stored, in a manner so it can be called up, in a storage device associated with the private branch exchange (PBX).

4. Method according to any one of the preceding claims, **characterized by** that the fact that the cessation is implemented by a blocking of a call number associated with the mobile communication device (MP), performed by the private branch exchange (PBX).

5. Method according to any one of the preceding claims, **characterized in that**, in the case of a logged on mobile communication device (MP), a connection to the mobile communication device (MP) is established by a connection with the mobile communication device (MP), which is performed by the private branch exchange (PBX).

6. Method according to any one of the preceding claims, **characterized in that** the implementation of the connection occurs due to a second message sent by the control device (KE) to the private branch exchange (PBX).

7. Method according to any one of the preceding claims, **characterized in that** the sending of the first and/or second message(s) occurs on the basis of information regarding a status change of the mobile communication device (MP), transmitted to the control device (KE).

8. Method according to any one of the preceding claims, **characterized in that** the control device (KE) acquires the associated information on the basis of the D-channel monitoring function of the private branch exchange (PBX).

9. Method according to any one of the preceding claims, **characterized in that**, as associated information, only the call number of the mobile communication device (MP) is detected.

10. Method according to any one of the preceding claims, **characterized in that** the status of the mobile communication device is reversed in each case by the establishment of the connection.

11. Method according to any one of the preceding claims, **characterized in that** the status change is acquired in such a manner that the mobile communication device (MP) transmits, with the mobile communication device (MP), associated information via a data service using the "Internet Protocol" IP and operating, in particular, in accordance with the "General Packet Switched Radio" GPRS, "Wireless Application Protocol" WAP.

12. Method according to any one of the preceding claims, **characterized in that** the information contains the call number of the mobile communication device (MP) as well as at least the status, in particular "reachable" or "not reachable."

13. Method according to any one of the preceding claims, **characterized in that** the control unit (KE) can read out information of the private branch exchange (PBX) for further processing, via a data service using the "Internet Protocol" IP and operating, in particular, in accordance with the "General Packet Switched Radio" GPRS, "Wireless Application Protocol" WAP.

14. Arrangement for processing connections conveyed by private branch exchanges (PBX) to a mobile phone network (GSM), **characterized by** means for carrying out the method according to any one of the preceding claims.

## Revendications

1. Procédé de traitement de connexions conduites par un échange à ramification privée (PBX) vers un réseau de téléphonie mobile (GSM), un dispositif de commande (KE) communiquant de manière telle avec l'échange à ramification privée (PBX) que dans le cas du transport d'une demande de connexion provenant d'un dispositif de télécommunication (TE) relié à l'échange à ramification privée (PBX) vers un dispositif de télécommunication mobile (MP), dans le cas d'un dispositif de télécommunication mobile déconnecté (MP), une installation de connexion cesse sur la part de l'échange à ramification privée (PBX) sous l'effet d'un premier message envoyé par le dispositif de commande (KE) à l'échange à ramification privée (PBX), **caractérisé en ce que**
- les informations relatives à un changement de statut du dispositif de télécommunication mobile (MP) sont transmises sous la forme d'une déconnexion du dispositif de télécommunication mobile (MP) du réseau de téléphonie mobile (GSM) vers l'échange à ramification (PBX), **en ce que**
a) le dispositif de télécommunication mobile (MP) établit une connexion vers un orifice défini ou vers un échange à ramification défini de l'échange à ramification privée (PBX) et après que l'installation s'arrête de nouveau immédiatement, en conséquence de quoi
b) l'échange à ramification privée (PBX) fait l'acquisition de la connexion qui s'est produite, et
c) détecte les informations associées au dispositif de télécommunication mobile (MP) comprenant un numéro d'appel du dispositif de télécommunication mobile (MP),
- les informations associées relatives au dispositif de télécommunication mobile (MP) sont transmises au dispositif de commande (KE) sous la forme d'une variation de statut du dispositif de télécommunication mobile (MP) par l'échange à ramification privée (PBX).

2. Procédé selon la revendication 1, **caractérisé en ce que** les informations relatives à une variation de statut du dispositif de télécommunication mobile (MP) sont transmises sous la forme d'une connexion du dispositif de télécommunication mobile (MP) à l'échange à ramification (PBX), **en ce que**
a) le dispositif de télécommunication mobile (MP) établit une connexion vers l'orifice défini ou vers l'échange à ramification définie de l'échange à ramification privée (PBX) et immédiatement après l'installation échoue de nouveau, en conséquence de quoi,
b) l'échange à ramification privée (PBX) fait l'acquisition de la connexion qui s'est produite, et
c) et détecte des informations associées au dispositif de télécommunication mobile (MP), comprenant un numéro d'appel du dispositif de télécommunication mobile (MP), et
- les informations associées relatives à la connexion au dispositif de télécommunication mobile (MP) sont transmises au dispositif de commande (KE) sous la forme d'un changement de statut du dispositif de télécommunication mobile (MP) par l'échange de ramification (PBX).

3. Procédé selon la revendication 1 ou 2, **caractérisé en ce que**, du côté de l'échange à ramification privée (PBX), en cas de cessation de l'installation de connexion
a) du côté de l'échange à ramification privée (PBX), l'enregistrement d'un message vocal est proposé,
b) un message vocal enregistré pour le dispositif de télécommunication mobile (MP) est enregistré, de manière à pouvoir être rappelé, dans un dispositif d'enregistrement associé à l'échange à ramification privée (PBX).

4. Procédé selon l'une quelconque des revendications précédentes, **caractérisé par le fait que** la cessation est mise en oeuvre par un blocage d'un numéro d'appel associé au dispositif de télécommunication mobile (MP), effectué par l'échange à ramification privée (PBX).

5. Procédé selon l'une quelconque des revendications précédentes, **caractérisé en ce que**, en cas d'un dispositif de télécommunication mobile (MP) connecté, une connexion vers le dispositif de télécommunication mobile (MP) est établie avec le dispositif de télécommunication mobile (MP), qui est exécutée par l'échange à ramification privée (PBX).

6. Procédé selon l'une quelconque des revendications précédentes, **caractérisé en ce que** la mise en oeuvre de la connexion a lieu du fait d'un deuxième message envoyé par le dispositif de commande (KE) à l'échange à ramification privée (PBX).

7. Procédé selon l'une quelconque des revendications précédentes, **caractérisé en ce que** l'envoi du premier et/ou du deuxième message(s) se fait en fonction des informations relatives à une modification de statut du dispositif de télécommunication mobile (MP), transmise au dispositif de commande (KE).

8. Procédé selon l'une quelconque des revendications précédentes, **caractérisé en ce que** le dispositif de commande (KE) fait l'acquisition des informations associées en fonction de la fonction de surveillance à canaux D de l'échange à ramification privée (PBX).

9. Procédé selon l'une quelconque des revendications précédentes, **caractérisé en ce que**, en tant qu'informations associées, seul le numéro d'appel du dispositif de télécommunication mobile (MP) est détecté.

10. Procédé selon l'une quelconque des revendications précédentes, **caractérisé en ce que** le statut du dispositif de télécommunication mobile est inversé dans chaque cas par l'installation de la connexion.

11. Procédé selon l'une quelconque des revendications précédentes, **caractérisé en ce que** le changement de statut est acquis de sorte que le dispositif de télécommunication mobile (MP) transmet,
avec le dispositif de télécommunication mobile (MP), des informations associées par le biais d'un service de données utilisant le « Protocole Internet » IP et fonctionnant, en particulier, conformément à la « Radio générale commutée par paquets » GPRS, au « Protocole d'application sans fil » WAP.

12. Procédé selon l'une quelconque des revendications précédentes, **caractérisé en ce que** les informations contiennent le numéro d'appel du dispositif de télécommunication mobile (MP) ainsi qu'au moins le statut, en particulier « joignable » ou « non joignable ».

13. Procédé selon l'une quelconque des revendications précédentes, **caractérisé en ce que** l'unité de commande (KE) peut lire des informations sur l'échange à ramification privée (PBX) pour un traitement supplémentaire, par le biais d'un service de données utilisant le « Protocole Internet » IP et fonctionnant en particulier selon la « Radio générale commutée par paquets » GPRS, le « Protocole d'application sans fil » WAP.

14. Agencement permettant de traiter des connexions assurées par des échanges à ramification privée (PBX) vers un réseau de téléphonie mobile (GSM), **caractérisé par** un moyen servant à mettre en oeuvre le procédé selon l'une quelconque des revendications précédentes.
